(19) Europäisches Patentamt
European Patent Office
Office européen des brevets

(11) Publication number: **0 119 196**
**B1**

(12) # EUROPEAN PATENT SPECIFICATION

(45) Date of publication of patent specification: **15.04.87**

(51) Int. Cl.[4]: **C 08 G 18/14,** C 08 G 18/38

(21) Application number: **82903117.8**

(22) Date of filing: **20.09.82**

(86) International application number:
**PCT/US82/01302**

(87) International publication number:
**WO 84/01157 29.03.84 Gazette 84/09**

(54) **EXPANDABLE URETHANE SEALANT COMPOSITIONS.**

(43) Date of publication of application:
**26.09.84 Bulletin 84/39**

(45) Publication of the grant of the patent:
**15.04.87 Bulletin 87/16**

(84) Designated Contracting States:
**DE FR GB**

(56) References cited:
**DE-A-1 902 311**
**GB-A- 770 632**
**GB-A- 887 724**
**GB-A-2 063 894**
**NL-B- 90 927**
**US-A-4 073 841**
**US-A-4 145 302**
**US-A-4 146 687**
**US-A-4 263 408**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **CHANG, Yun, Feng**
**47955 Brewster Ct.**
**Plymouth, MI 48170 (US)**

(74) Representative: **Messulam, Alec Moses et al**
**A. Messulam & Co. 24 Broadway**
**Leigh on Sea Essex SS9 1BN (GB)**

**EP 0 119 196 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to expandable urethane compositions adapted for use as sealants in, for example, automotive industry applications requiring the sealing of various body panels or joints. More particularly, this invention relates to two-component expandable urethane sealant compositions which cure by chemical reaction between a first component comprising a mixture of hydroxy functional liquid elastomers and metal salts of an organic sulfonate and a second component comprising polyisocyanate.

Modern sealants are comprised of pigmented or unpigmented synthetic elastomeric polymers, which, in the non-cured state, constitute pourable or easily extrudable putty-like mastics. When cured, they are transformed into elastomeric materials which seal these structural elements and are able to contract or expand with the motion of the connected elements. They also form a tight barrier against moisture, gases and chemicals.

Such sealants include one-component and two-component compositions whose curing may proceed according to several mechanisms. One type of sealant, urethane sealants, include one-component compositions containing only isocyanate terminated prepolymers that cure by reaction of mixtures and isocyanate to form urea linkages. Two-component urethane sealants are prepared from isocyanate-terminated prepolymers and compounds containing active hydrogens both of which are generally sufficiently fluid to be blended at room temperature. These two component sealants cure by the formation of urethane linkages. Urethane polymers are good candidates for sealant applications because they possess a number of desirable properties including outstanding abrasion resistance, oil resistance, low temperature flexibility, resistance to degradation, excellent elasticity and, consequently, a high recovery. Because of an almost unlimited diversity of raw materials, polyurethanes can be formulated with excellent physical properties including low modulus, with retention of good tear and tensile strength.

Recently sealants which expand when heated have become available. These foam sealants, because they are able to expand to effectively seal a joint, are particularly useful as sealants for irregularly shaped or poorly fitting joints. Flexible urethane foams are generally prepared by incorporating water into the urethane compositions. The reaction of the water and the isocyanate generates carbon dioxide which acts as a blowing agent to generate the foam. Alternately, fluorocarbons such as trichlorofluoromethane or other volatile solvents have been incorporated into polyurethane compositions as slowing agents to form flexible foams.

GB—A—887,724 discloses a process for the manufacture of foamed cellular polyurethane materials by interaction of an organic polyisocyanate and a hydroxyl-ended polyether. The polyether and the polyisocyanate containing full isocyanate groups is reacted with water in the presence of alkali metal or ammonium salt of a high molecular weight organic compound containing one or more $—SO_3H$ or $—OSO_3H$ groups, together with a hydrocarbon radical containing at least 10 carbon atoms.

GB—A—770632 discloses a process for making foams which comprises reacting at least one organic polyester containing a plurality of hydroxylic and/or carboxylic acid groups with an organic polyisocyanate in the presence of water and an organic compound containing an uninterrupted carbon chain of at least 10 consecutive carbon atoms and at least one sulphate and/or sulphonate radical in the molecule. Alkali metal salts of sulphonated fatty acids or fatty oils may be used in this process.

A novel composition has now been found to generate expandable urethane sealants without the use of water or volatile solvents as blowing agents therein. Such compositions have been found particularly useful as automotive sealants for sealing various body parts. The invention of the subject application is directed to a two-component expandable urethane sealant compositions comprising reactive elastomer and polyisocyanate, characterized in that these compositions comprise a first component mixture comprising liquid reactive elastomer and metal salts of an organic sulfonate and a second component comprising polyisocyanate.

The liquid reactive elastomer (a) has a number average molecular weight ($\overline{M}_n$) of between about 1500 and 15,000, (b) contains pendant hydroxyl groups, and (c) is liquid at between about 20°C and 25°C. The metal salt of organic sulfonates have the formula:

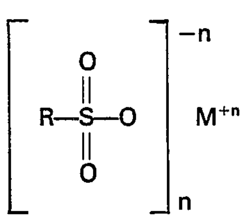

wherein R is selected from $C_8$—$C_{36}$ hydrocarbon groups and M is a metal ion wherein n=1, 2 or 3. The elastomer and the metal salts of organic sulfonates are present in the mixture in amounts so as to provide between about 20 and about 80 percent hydroxyl groups and between about 80 and about 20 percent sulfonate groups, based on the total of these hydroxyl groups and sulfonate groups. Preferably, the sulfonate is employed dispersed in nonvolatile diluent oil. The polyisocyanate has at least two reactive isocyanate groups per molecule and is included in the composition in an amount so as to provide between

about 0.85 and about 1.15 reactive isocyanate groups for each reactive functional group present in the composition either as a hydroxyl group on the liquid reactive elastomer or as a sulfonate group of the metal salts of organic sulfonates. Optionally, the composition may comprise up to about 15 weight percent pigment and/or other fillers based on the total weight of elastomer, sulfonate (dispersion) and polyisocyanate.

After curing the composition at an elevated temperature a foam-type sealant is obtained. The sealant has excellent flexibility, good abrasion and impact resistance, and good sound-deadening properties. Additionally, this composition advantageously exhibits excellent adhesion to oily surfaced substrates, particularly metals, which have not been cleaned prior to application of the sealant composition.

The composition of this invention is used as a two-component system. Component A comprises a uniformly blended mixture of liquid reactive elastomer and metal salts of organic sulfonates along with optional additives such as pigments, fillers, U.V. absorbers, oxidants and other nonreactive materials. Component B comprises a polyisocyanate or a mixture of polyisocyanates. Prior to application of the composition, component A and component B are blended. The composition is in a putty-like mastic form and can be applied to the joint or substrate in a variety of ways, e.g., by means of a putty knife or by extrusion. The sealant composition is then cured, generally for about 5 to 25 minutes at a temperature of between about 120°C and 180°C, to obtain a foam-type sealant. Selection of optimal cure conditions, including those different from those taught above, would be within the skill of one in the art.

As noted above, the expandable urethane sealant compositions employ, in combination, liquid reactive elastomer having a number average molecular weight $(\overline{M}_n)$ between about 1500 and about 15000 and containing pendant hydroxyl groups, metal salts of organic sulfonate, polyisocyanate or mixture of polyisocyanates, and optionally components such as pigments, fillers, antioxidants or ultraviolet light absorbers. Each component will hereinafter be described in detail.

Liquid reactive elastomers

The elastomers suitable for use in Component A of the composition of this invention contain a reactive functionality, in contrast with liquid rubber systems widely used in the area of elastomeric sealants, caulks, binders, potting-encapsulation, and structural adhesives which generally contain no such reactive group. The liquid reactive elastomers useful in the composition of this invention contain pendant hydroxyl group capable of reacting with the isocyanate during curing. These elastomers are low molecular weight materials having a number average molecular weight $(M_n)$ of between about 1500 and about 15000 preferably between about 2000 to 5000, and are liquid at room temperature, i.e., at 20°C—25°C.

Examples of such liquid reactive elastomers which may be used in the composition of this invention include, but are not limited to, liquid reactive rubbers such as hydroxyl terminated butadiene polymers and hydroxyl terminated butadiene/acrylonitrile copolymers. Generally these liquid rubbers contain, on the average, about 2 hydroxyl groups per molecule so as to be essentially considered a diol elastomer. Hydroxyl terminated butadiene polymer and hydroxyl terminated butadiene/acrylonitrile polymer are commercially available, for example from B. F. Goodrich Chemical Company, Chemical Group, Cleveland, Ohio, under the tradename of Hycar (Regd. Trade Mark) Polymer. Suitable examples of these useful in the subject invention, include 1300×29 (HTBN) and 1300×17 (NTBN).

While butadiene polymers and butadiene/acrylonitrile copolymers have been taught as suitable for elastomers of this invention, other elastomers such as acrylic, polyisobutylene, polyisoprene, polychloroprene and other such polyols may be used as long as they possess the desired hydroxyl functionality and physical limitation as described above. The selection of suitable liquid reactive elastomers (polyols) used in this composition will be well within the capability of one skilled in the art. As will be apparent to one skilled in the art, mixtures of such suitable liquid reactive elastomers may also be used in the composition of this invention.

Metal salts of organic sulfonates

Component A of the subject composition also comprises metal salts of organic sulfonates of the general formula:

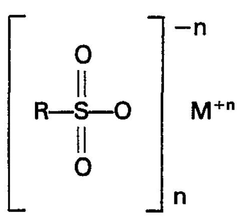

wherein R is selected from $C_8$—$C_{36}$ hydrocarbon groups and M is a cation, n being 1, 2 or 3. Suitable cations include, but are not limited to sodium, calcium, barium, or magnesium, calcium and magnesium being preferred. R is preferably a $C_{10}$—$C_{36}$ petroleum hydrocarbon group and/or mixtures of other materials such as olefin, olefin polymer, natural fats, fatty oils and waxes. The preferred equivalent weights of metal salts of organic sulfonates are in the range of about 200 to about 600.

Metal salts of organic sulfonates may be obtained by sulfonating various petroleum fractions or their mixtures with sulfuric acid, chlorosulfonic acid, sulfur trioxide and their mixtures. The petroleum hydrocarbons may be aliphatic, cyclic and/or aromatic. One such metal salt of an organic sulfonate may be produced, for example, by treating a mineral oil having a Saybolt Universal viscosity at about 39°C or from about 400 to 540 seconds with fuming sulfuric acid, preferably in small increments. After a calculated amount of sulfuric acid has been added to the oil, the sludge which forms is removed and the acid-treated oil containing dissolved oil-soluble sulfuric acid is neutralized with a solution of calcium hydroxide. The aqueous alkali solution is removed from the mixture and the calcium salts of petroleum sulfonic acid extracted with alcohol, the alcohol layer containing the sulfonates can be removed by distillation or by any other suitable means. Preparation of the petroleum sulfonates are well known in the literature and such techniques can be found in U.S.—A—2,395,713; 2,413,199; 2,414,773; 2,416,397; and if desired, the petroleum sulfonate may be purified by means disclosed in U.S.—A—2,236,993; 2,334,532; 2,357,866; 2,368,452 and 2,406,703. For ease in incorporating the metal salt of the sulfonate complex which is a very hard solid into the composition, it is preferably employed as a dispersion in a non-volatile oil. Among numerous such oil which may be employed are mineral lubricating oils and synthetic lubricating oils. Commercially available dispersions of the petroleum sulfonate complex in oil are available, for example, from Witco Chemical Corporation, New York, N. Y., under the trade name of SACI (Severe Atmospheric Corrosion Inhibitor). Examples of such SACI (Regd. Trade Mark) materials which may be employed in the subject composition includes, but is not limited to, CI 51, CI 55 and SACI 200-A.

Preferred sulfonate complex/oil dispersions for use in this invention are those wherein the sulfonate complex comprises between about 40 and about 70 weight percent of the dispersion. More preferably the sulfonate complex comprises between about 50 and about 65 weight percent, most preferably about 50 weight percent of the sulfonate oil dispersion which may be employed in the composition of this invention.

As would be apparent to one skilled in the art, mixtures of various sulfonates as well as sulfonate dispersions could be employed herein.

The elastomer and metal salts of organic sulfonates are present in the mixture of Component A in amounts so as to provide between about 20 and 80 percent hydroxyl groups and between 80 and 20 percent sulfonate groups, based on the total of the hydroxyl groups and sulfonate groups present in the mixture.

Polyisocyanate crosslinking agent

Components B of the expandable urethane sealant of this invention comprises a polyisocyanate, i.e., a compound having 2 or more, preferably 3 or more, reactive isocyanate groups per molecule. This polyisocyanate crosslinking agent is included in the compositions of the invention in an amount so as to provide between about 0.85 and about 1.15, more preferably about 1.10 and 0.90, most preferably about 1.0 reactive isocyanate groups for each reactive functional group present in the composition either as a hydroxyl group on the elastomer or as a sulfonate group of the metal salts of organic sulfonates.

Polyisocyanates are well known in the art and numerous suitable isocyanates having 2 or more reactive isocyanate groups per molecule will be apparent to those skilled in the art. Among the many suitable polyisocyanates are aliphatic, cycloaliphatic and aromatic isocyanate compounds. Representative of the numerous isocyanates which may be employed are 1,5-naphthalene diisocyanate (NDI), 4,4′-diphenolmethane diisocyanate (MDI), polymethylene polyphenyl isocyanate (PAPI), 2,4 or 2,6 toluene diisocyanate (TDI), 1,6-hexamethylene diisocyanate (HDI), dimeryl diisocyanate (BDI), 2,4′- dicyclohexylmethane diisocyanate ($H_{12}MDI$), Xylylene diisocyanate (XDI), methylcyclohexyl diisocyanate (HTDI), etc.

Among the various isocyanates available for the formation of urethanes, isocyanates with more than two functional groups have been found to be desirable. Such a preferred isocyanate is a trifunctional product of 3 moles of 1,6-hexamethylene diisocyanate with 1 mole of water, as follows:

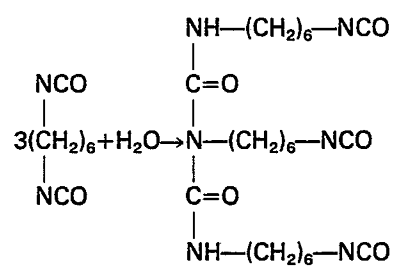

A commercial example is the product sold under the registered Trade Mark "Desmodur N-10".

Such polyisocyanates are particularly preferable because they exhibit a low vapor pressure. Additionally, mixtures of polyisocyanates (with three or more functional groups) and diisocyanates have been found particularly useful in the subject composition.

It has been found that the liquid reactive elastomers and the metal salts of the sulfonates are able to react with polyisocyanates at elevated temperatures to form the expandable urethane foam without the addition of catalysts or blowing agents. However, when desired, although not preferable, catalysts for the

isocyanate curing reaction may be incorporated into the composition. Suitable catalyst which may be employed include tertiary amine catalysts such as N,N-Diethylcyclohexylamine and N-Methylmorpholine; metallic organic catalyst such as sodium o-phenylphenate, potassium oleate, and tetra-(2-ethyl hexyl) titanate.

When polyisocyanates are mixed with metal salts of organic sulfonates and heated at elevated temperatures, some crosslinking reactions are observed. The chemistry of these reactions are not fully understood, but gaseous substances are evolved from the crosslinking reactions. These gaseous substances act as blowing agents in the formation of the urethane foam of this invention. However, neither the validity of these observations nor their understanding is necessary for the practice of the subject invention.

Optional components including pigments and fillers

In addition to the above discussed components, other materials such as pigments, both hiding pigments and extending pigments, inert fillers, fire retardants and antioxidants may also be included in the expandable urethane sealant composition of this invention. When included these materials may additionally comprise up to about 15 weight percent based on the total weight of the elastomer, sulfonate (dispersion) and polyisocyanate. Pigments and fillers commonly used in such compositions include titanium dioxide, antimony sulfide, carbon black, calcium carbonate, aluminium powder, mica, powder glass, clay, and ground silica. Flame retardants available to impart fire retardants to sealant formulations include such materials as antimony oxide, alumina-trihydrate, and phosphorous containing compounds. In order to increase the resistance of urethane sealants to oxidation, antioxidants such as phenols, aromatic amines, or condensation products of amino-phenol with aldehyde or thio compounds may be incorporated in the composition. These optional components are generally incorporated into the component A mixture.

Other such optional components which may be included in this composition would be well known to one skilled in the art.

The invention will be further understood by referring to the following detailed examples. It should be understood that the specific examples are presented by way of illustration and not by way of limitation. Unless otherwise specified, all reference to "parts" is intended to mean parts by weight.

Example 1

| | Parts by weight | Equivalent |
|---|---|---|
| Component A: | | |
| Hydroxyl-terminated butadiene/acrylonitrile copolymer (Hycar 1300×29, OH equivalent weight 2000) | 45 | 0.023 |
| Calcium salt of petroleum sulfonate dispersion in 50% solids in non-volatile oil; CI-51 (Sulfonate equivalent weight 340 based on solids) | 40 | 0.059 |
| Component B: | | |
| Desmodur N-100 (—NCO equivalent weight 200) available from Mobay Chemical Corp. Pittsburgh, Pa. | 15 | 0.075 |

In a mixing tank equipped with a mechanical mixer, the materials of Component A are mixed so as to be homogeneous.

Shortly before application, component B is added to Component A and the mixture is blended homogeneously. This mixture has a workable life of at least 24 hours at room temperature. To a steel panel coated with electro-coat primer, the expandable urethane sealant composition is applied with a putty knife at a thickness of 20 mils. The panel is baked at 150°C for 10 minutes and the coating is converted into a foam type sealant. This foam type sealant is light yellow in color and resilient. The expandable sealant has good adhesion, excellent impact and abrasion resistance and outstanding sound-deadening property. A panel coated with expandable urethane sealant was tested in Gravolometer and no chipping was observed.

Example 2

The same composition and same procedure is repeated as in Example 1 except the mixture is applied on a cold-rolled steel panel covered with a thin film of mill oil and lubricant. After baking at 150°C for 10 minutes, the urethane foam sealant has good adhesion to the oily steel surface, excellent sound deadening properties and impact and abrasion resistance.

Example 3

The same compositions as Example 1 is repeated except the mixture is filled into the space of about ¼

inch between two cold-rolled steel panels. After baking at 150°C for 10 minutes, the panels are joined with foam type sealant. The sealant has good adhesion and elasticity.

Example 4

| | Parts by weight | Equivalents |
|---|---|---|
| Component A: | | |
| Hycar 1300×29 | 40 | 0.02 |
| Calcium salt of petroleum sulfonate dispersion 70% in non-volatile oil (Sulfonate equivalent weight 340 based on solids) | 40 | 0.08 |
| Component B: | | |
| Desmodur N-100 | 20 | 0.10 |

The same procedure as in Example 1 is repeated. The resulting expandable urethane sealant possesses good adhesion, abrasion and impact resistance and sound deadening properties.

Example 5

| | Parts by weight | Equivalents |
|---|---|---|
| Component A: | | |
| Hycar 1300×29 | 50 | 0.025 |
| Calcium salt of petroleum sulfonate dispersion 50% solids in non-volatile oil | 31 | 0.064 |
| Aluminum pigment | 3 | |
| Aluminatrihydrate | 7 | |
| Component B: | | |
| Desmodur N-100 | 19 | 0.095 |

The same procedure as in Example 1 is repeated except that the mixture is filled into the space between two steel panels. After baking at 180°C for 5 minutes, the panels being joined with a gray color foam type sealant.

Example 6

| | Parts by weight | Equivalents |
|---|---|---|
| Component A: | | |
| Hycar 1300×29 | 40 | 0.020 |
| Calcium salt of petroleum sulfonate dispersion 50% solids in non-volatile oil | 46 | 0.068 |
| Carbon black | 5 | |
| Component B: | | |
| Desmodur N-100 | 10 | 0.050 |
| Toluene diisocyanate (—NCO equivalent weight 87) | 4 | 0.046 |

The same procedure as in Example 5 is repeated. A black color expandable sealant is obtained.

Example 7

| | Parts by weight | Equivalents |
|---|---|---|
| Component A: | | |
| Hycar 1300×29 | 55 | 0.028 |
| Calcium salt of petroleum sulfonate (40% solids in non-volatile oil) Sulfonate equivalent weight 340 based on solids | 32 | 0.038 |
| Aluminum pigment | 3 | |
| Aluminatrihydrate | 7 | |
| Component B: | | |
| Desmodur N-100 | 13 | 0.065 |

The procedure of Example 5 is repeated except that the mixture is filled into the space between two steel panels and baked at 180°C for 5 minutes. The panels are joined with a gray color foam type sealant.

Example 8

| | Parts by weight | Equivalents |
|---|---|---|
| Component A: | | |
| Hycar 1300×29 | 90 | 0.045 |
| Aluminum pigment | 3 | |
| Aluminatrihydrate | 7 | |
| Component B: | | |
| Desmodur N-100 | 10 | 0.050 |

In this Example, no metal salt of petroleum sulfonate is used. After baking at 150°C for 10 minutes, the polyisocyanate is found to react with the hydroxyl terminated butadiene/acrylonitrile copolymer to form a crosslinked product, but no foam is formed, and therefore the sealant is not resilient and its sound deadening properties are poor.

Example 9

| Ingredients: | Parts by weight |
|---|---|
| Hycar 1300×29 | 50 |
| Calcium salt of petroleum sulfonate (in 50% non-volatile oil) | 50 |

In this Example, no polyisocyanate is included in the composition. After baking at 150°C for 25 minutes, the sealant is still in a putty form and is soft and tacky. It seems no chemical reaction occurred.

Industrial applicability

This invention relates to compositions for making urethane foam without the use of conventional blowing agents such as water or volatile solvents. This expandable urethane composition can be adapted for use as sealants for automotive application. These sealants offer good adhesion to oily surface substrates and superior sound insulation effects. They are useful in automotive applications such as sealing the hem flange of hood and door assemblies for corrosion protection, sealing the floor pan and roof panel for sound insulation. Other applications in, for example, transportation and construction would be apparent to one in the art.

**Claims**

1. A two component expandable urethane sealant composition comprising liquid reactive elastomer and polyisocyanate, characterized in that said composition comprises:

(A) a mixture of:

(i) liquid reactive elastomer (a) having a number average molecular weight $(\overline{M}_n)$ between about 1500 and about 15,000, (b) containing pendant hydroxyl groups, and (c) being liquid at between about 20° and about 25°C; and

(ii) metal salts of organic sulfonates having the formula:

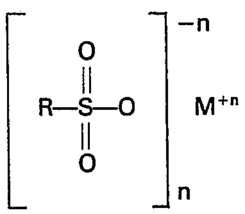

wherein R is selected from $C_8$—$C_{36}$ hydrocarbon groups and M is a metal ion wherein n=1, 2 or 3; and

(B) polyisocyanate having at least two isocyanate groups per molecule, and

wherein said elastomer and said metal salts of organic sulfonates are present in said mixture in amounts so as to provide between about 20 and about 80 percent hydroxyl groups and between about 80 and about 20 percent sulfonate groups based on the total of said hydroxyl groups and said sulfonate groups; and

wherein said polyisocyanate is included in said composition in an amount so as to provide between about 0.85 and 1.15 reactive isocyanate groups for each reactive functional group present in said composition either as a hydroxyl group on said liquid reactive elastomer or as a sulfonate group of said metal salts of organic sulfonates.

2. A two component expandable urethane sealant composition according to claim 1, wherein said liquid reactive elastomer has a number average molecular weight of between about 2000 and about 5000.

3. A two component expandable urethane sealant composition according to claim 2, wherein said elastomer contains about two hydroxyl groups per molecule.

4. A two component expandable urethane sealant composition according to claim 1, wherein said R is a $C_{10}$—$C_{36}$ petroleum hydrocarbon group.

5. A two component expandable urethane sealant composition according to claim 1 or 4, wherein M is selected from the group consisting of calcium, magnesium, sodium and barium.

6. A two component expandable urethane sealant composition according to claim 1, wherein the equivalent weight of said metal salts of said organic sulfonates is between about 200 and about 600.

7. A two component expandable urethane sealant composition according to claim 1, wherein said metal salts of said organic sulfonates are included in said composition as a dispersion in diluent oil.

8. A two component expandable urethane sealant composition according to claim 7, wherein said sulfonate comprise between about 40 and about 70 weight percent of said dispersion.

9. A two component expandable urethane sealant composition according to claim 8, wherein said sulfonates comprise between about 50 and 65 weight percent of said dispersion.

10. A two component expandable urethane sealant composition according to claim 9, wherein said sulfonates comprise about 50 weight percent of said dispersion.

11. A two component expandable urethane sealant composition according to claim 1, wherein said polyisocyanate is included in said composition so as to provide between about 1.10 and about 0.90 reactive isocyanate groups for each reactive functional group present in said composition either as hydroxyl groups on said liquid reactive elastomer or as a sulfonate groups of said metal salts of organic sulfonates.

12. A two component expandable urethane sealant composition according to claim 11, wherein said polyisocyanate is included in said composition in an amount so as to provide about 1.0 reactive isocyanate groups for each reactive functional group present in said composition either as a hydroxyl groups on said liquid reactive elastomer or as a sulfonate groups of said metal salts of organic sulfonates.

13. A two component expandable urethane sealant composition according to claim 1 or 11, wherein said polyisocyanate has three or more reactive isocyanate groups per molecule.

14. A two component expandable urethane sealant composition according to claim 1, wherein said polyisocyanate comprises a mixture of diisocyanate and polyisocyanate having at least three isocyanate groups.

15. A two component expandable urethane sealant composition according to claim 1, wherein said composition further comprises up to about 15 weight percent fibers and/or pigments based on the total weight of said elastomer, said sulfonate, diluent oil, and said polyisocyanate.

**Patentansprüche**

1. Schäumbare Zweikomponenten-Urethandichtungsmasse aus flüssigen reaktionsfähigen Elastomeren und Polyisocyanat, dadurch gekennzeichnet, dass sie aus:

(A) einem Gemisch aus

(i) flüssigem reaktionsfähigem Elastomeren mit (a) einem zahlenmittleren Molekulargewicht $(\overline{M}_n)$

zwischen etwa 1500 und etwa 15 000, das (b) Hydroxylseitengruppen enthält und (c) zwischen etwa 20° und etwa 25°C flüssig ist, und

(ii) Metallsalzen organischer Sulfonsäuren der Formel

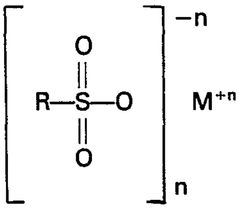

worin R unter $C_8$—$C_{36}$-Kohlenwasserstoffgruppen ausgewählt ist und M ein Metallion mit n=1, 2 oder 3 darstellt, und

(B) einem Polyisocyanat mit mindestens zwei Isocyanatgruppen pro Molekül besteht, wobei dieses Elastomer und diese Metallsalze organischer Sulfonsäuren in besagtem Gemisch in solchen Mengen vorliegen, dass sich etwa 20 bis etwa 80 Prozent Hydroxylgruppen und etwa 80 bis etwa 20 Prozent Sulfonatgruppen, bezogen auf die Summe dieser Hydroxylgruppen und Sulfonatgruppen ergeben, und wobei dieses Polyisocyanat in dieser Masse in einer solchen Menge vorliegt, das je etwa 0,85 bis 1,15 reaktionsfähige Isocyanatgruppen auf je eine reaktionsfähige, in dieser Masse entweder als Hydroxylgruppe auf jenem flüssigen reaktionsfähigen Elastomeren oder als Sulfonatgruppe jener Metallsalze organischer Sulfonsäuren vorhandene funktionelle Gruppe kommen.

2. Schäumbare Zweikomponenten-Urethandichtungsmasse nach Anspruch 1, worin dieses flüssige reaktionsfähige Elastomer ein zahlenmittleres Molekulargewicht zwischen etwa 2000 und etwa 5000 aufweist.

3. Schäumbare Zweikomponenten-Urethandichtungsmasse nach Anspruch 2, worin dieses Elastomer etwa zwei Hydroxylgruppen pro Molekül enthält.

4. Schäumbare Zweikomponenten-Urethandichtungsmasse nach Anspruch 1, worin R für eine $C_{10}$—$C_{36}$-Petroleumkohlenwasserstoffgruppe steht.

5. Schäumbare Zweikomponenten-Urethandichtungsmasse nach Anspruch 1 oder 4, worin M aus der Calcium, Magnesium, Natrium und Barium umfassenden Gruppe ausgewählt ist.

6. Schäumbare Zweikomponenten-Urethandichtungsmasse nach Anspruch 1, worin das Äquivalentgewicht jener Metallsalze organischer Sulfonsäuren zwischen etwa 200 und etwa 600 liegt.

7. Schäumbare Zweikomponenten-Urethandichtungsmasse nach Anspruch 1, worin jene Metallsalze organischer Sulfonsäuren in dieser Masse als Dispersion in einem Verdünnungsöl vorliegen.

8. Schäumbare Zweikomponenten-Urethandichtungsmasse nach Anspruch 7, worin diese Sulfonate etwa 40 bis etwa 70 Gewichtsprozent dieser Dispersion ausmachen.

9. Schäumbare Zweikomponenten-Urethandichtungsmasse nach Anspruch 8, worin diese Sulfonate etwa 50 bis 65 Gewichtsprozent dieser Dispersion ausmachen.

10. Schäumbare Zweikomponenten-Urethandichtungsmasse nach Anspruch 9, worin diese Sulfonate etwa 50 Gewichtsprozent dieser Dispersion ausmachen.

11. Schäumbare Zweikomponenten-Urethandichtungsmasse nach Anspruch 1, worin dieses Polyisocyanat in dieser Masse in einer solchen Menge vorliegt, dass je etwa 1,10 bis etwa 0,90 reaktionsfähige Isocyanatgruppen auf je eine reaktionsfähige, in dieser Masse entweder als Hydroxylgruppe auf jenem flüssigen reaktionsfähigen Elastomeren oder als Sulfonatgruppe jener Metallsalze organischer Sulfonsäuren vorhandene funktionelle Gruppe kommen.

12. Schäumbare Zweikomponenten-Urethandichtungsmasse nach Anspruch 11, worin dieses Polyisocyanat in dieser Masse in einer solchen Menge vorliegt, dass etwa 1,0 reaktionsfähige Isocyanatgruppe auf je eine reaktionsfähige, in dieser Masse entweder als Hydroxylgruppe auf jenem flüssigen reaktionsfähigen Elastomeren oder als Sulfonatgruppe jener Metallsalze organischer Sulfonsäuren vorhandene funktionelle Gruppe kommt.

13. Schäumbare Zweikomponenten-Urethandichtungsmasse nach Anspruch 1 oder 11, worin dieses Polyisocyanat drei oder mehr reaktionsfähige Isocyanatgruppen pro Molekül trägt.

14. Schäumbare Zweikomponenten-Urethandichtungsmasse nach Anspruch 1, worin dieses Polyisocyanat aus einem Gemisch aus Diisocyanat und Polyisocyanat mit mindestens drei Isocyanatgruppen besteht.

15. Schäumbare Zweikomponenten-Urethandichtungsmasse nach Anspruch 1, worin diese Masse ferner bis zu etwa 15 Gewichtsprozent Fasern und/oder Pigmente, bezogen auf das Gesamtgewicht dieses Elastomeren, Sulfonats, Verdünnungsöls und Polyisocyanats enthält.

**Revendications**

1. Composition de matériau d'étanchéité expansible à base d'uréthane à deux constituants

comprenant un élastomère réactif liquide et un polyisocyanate, caractérisée en ce que cette composition comprend:

(A) un mélange de:

(I) un élastomère réactif liquide (a) ayant une masse moléculaire moyenne en nombre ($\overline{M}_n$) entre environ 1500 et environ 15 000, (b) contenant des groupes hydroxyle latéraux, et (c) étant liquide entre environ 20° et environ 25°C; et

(II) des sels métalliques de sulfonates organiques répondant à la formule:

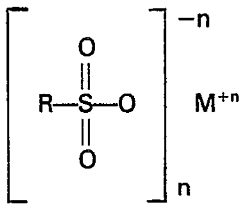

dans laquelle R est choisi parmi des groupes hydrocarbonés en $C_8$ à $C_{36}$ et M est un ion métallique, n étant égal à 1, 2 ou 3; et

(B) un polyisocyanate ayant au moins deux groupes isocyanate par molécule, et dans laquelle ledit élastomère et lesdits sels métalliques de sulfonates organiques sont présents dans le mélange en des quantités telles qu'ils fournissent entre environ 20 et environ 80% de groupes hydroxyle et entre environ 80 et entre environ 20% de groupes sulfonate par rapport au total des groupes hydroxyle et des groupes sulfonate; et

dans laquelle le polyisocyanate est inclus dans la composition en une quantité telle qu'il fournisse entre environ 0,85 et 1,15 groupe isocyanate réactif pour chaque groupe fonctionnel réactif présent dans ladite composition, soit sous forme de groupe hydroxyle sur l'élastomère réactif liquide, soit sous forme de groupe sulfonate des sels métalliques de sulfonates organiques.

2. Composition de matériau d'étanchéité expansible à base d'uréthane à deux constituants suivant la revendication 1, dans laquelle ledit élastomère réactif liquide a une masse moléculaire moyenne en nombre entre environ 2 000 et environ 5 000.

3. Composition de matériau d'étanchéité expansible à base d'uréthane à deux constituants suivant la revendication 1, dans laquelle ledit élastomère contient environ 2 groupes hydroxyle par molécule.

4. Composition de matériau d'étanchéité expansible à base d'uréthane à deux constituants suivant la revendication 1, dans laquelle R est un groupe hydrocarboné de pétrole en $C_{10}$ à $C_{36}$.

5. Composition de matériau d'étanchéité expansible à base d'uréthane à deux constituants suivant la revendication 1 ou 4, dans laquelle M est choisi parmi le calcium, le magnésium, le sodium et le baryum.

6. Composition de matériau d'étanchéité expansible à base d'uréthane à deux constituants suivant la revendication 1, dans laquelle le poids équivalent desdits sels métalliques des sulfonates organiques est d'environ 200 et environ 600.

7. Composition de matériau d'étanchéité expansible à base d'uréthane à deux constituants suivant la revendication 1, dans laquelle les sels métalliques des sulfonates organiques sont inclus dans la composition sous la forme d'une dispersion dans une huile diluante.

8. Composition de matériau d'étanchéité expansible à base d'uréthane à deux constituants suivant la revendication 7, dans laquelle le sulfonate représente entre environ 40 et environ 70% en poids de ladite dispersion.

9. Composition de matériau d'étanchéité expansible à base d'uréthane à deux constituants suivant la revendication 8, dans laquelle les sulfonates représentent entre environ 50 et 65% en poids de ladite dispersion.

10. Composition de matériau d'étanchéité expansible à base d'uréthane à deux constituants suivant la revendication 9, dans laquelle les sulfonates représentent environ 50% en poids de ladite dispersion.

11. Composition de matériau d'étanchéité expansible à base d'uréthane à deux constituants suivant la revendication 1, dans laquelle le polyisocyanate est inclus dans la composition de manière à fournir entre environ 1,10 et environ 0,90 groupe isocyanate pour chaque groupe fonctionnel réactif présent dans la composition, soit sous forme de groupes hydroxyle sur ledit élastomère réactif liquide, soit sous forme de groupes sulfonates des sels métalliques de sulfonates organiques.

12. Composition de matériau d'étanchéité expansible à base d'uréthane à deux constituants suivant la revendication 11, dans laquelle le polyisocyanate est inclus dans la composition en une quantité telle qu'il fournisse environ 1,0 groupe isocyanate réactif pour chaque groupe fonctionnel réactif présent dans la composition, soit sous forme de groupes hydroxyle sur l'élastomère réactif liquide, soit sous forme de groupes sulfonate des sels métalliques de sulfonates organiques.

13. Composition de matériau d'étanchéité expansible à base d'uréthane à deux constituants suivant la revendication 1 ou 11, dans laquelle le polyisocyanate a 3 groupes isocyanate réactifs par molécule ou davantage.

14. Composition de matériau d'étanchéité expansible à base d'uréthane à deux constituants suivant la revendication 1, dans laquelle ledit polyisocyanate comprend un mélange de diisocyanate et de polyisocyanate ayant au moins 3 groupes isocyanate.

15. Composition de matériau d'étanchéité expansible à base d'uréthane à deux constituants suivant la revendication 1, dans laquelle cette composition comprend en outre jusqu'à environ 15% en poids de fibres et de pigments, par rapport au poids total dudit élastomèr, du sulfonate, de l'huile diluante et du polyisocyanate.